# EUROPÄISCHE PATENTSCHRIFT

(11) **EP 3 103 538 B1**
(45) Veröffentlichungstag und Bekanntmachung des Hinweises auf die Patenterteilung: **30.01.2019**
(21) Anmeldenummer: 16455001.4
(22) Anmeldetag: 18.05.2016
(51) Int. Cl.: B01D 1/22, B01J 19/18

(54) **DÜNNSCHICHTVERDAMPFER**
THIN-FILM EVAPORATOR
VAPORISATEUR A COUCHE MINCE

(30) Priorität: 12.06.2015 AT 504802015
(43) Veröffentlichungstag der Anmeldung: 14.12.2016
(73) Patentinhaber: GIG Karasek GmbH, 2640 Gloggnitz-Stuppach (AT)
(72) Erfinder: Bethge, Daniel Sergius, 2620 Neunkirchen (AT)
(74) Vertreter: Patentanwaltskanzlei Matschnig & Forsthuber OG

(56) Entgegenhaltungen:
- DE-A1- 1 745 541
- DE-B- 1 161 852
- US-A- 3 797 550

## Beschreibung

Die Erfindung bezieht sich auf einen Dünnschichtverdampfer zum Trennen leichter flüchtiger Fraktionen von schwerer siedenden Rückständen durch Eindampfen, mit einem geschlossenen, zylindrischen Reaktorbehälter, dessen Reaktorwandung mittels einer Heizeinrichtung beheizbar ist, mit einem Einlass für das aufzutrennende Einsatzmaterial, einem Auslass für die Rückstände und einem Abzug für die Brüden, sowie mit zumindest einer, mit einem Antriebsmittel verbundenen Antriebswellenanordnung, die zumindest eine Wischeinrichtung mit einem Rotor mit Wischerelementen für die Innenfläche der Reaktorwandung besitzt.

Die Stofftrennung durch Verdampfen mit anschließender Kondensation der Dämpfe zählt zu den thermischen Trennverfahren. Sie wird angewendet, um flüssige Stoffgemische in leichter und schwerer siedende Fraktionen zu trennen. Beispielsweise kann solcherart Wasser von organischen Substanzen separiert werden. Im industriellen Maßstab werden häufig sogenannte Dünnschichtverdampfer der oben genannten Art eingesetzt. Ein Dünnschichtverdampfer ist ein Verdampfer, der Lösungen in einem dünnen Film verdampft. Er wird meistens im Vakuum betrieben und eignet sich deshalb zum schonenden Trennen von Stoffgemischen bei vergleichsweise niedrigen Temperaturen.

Der im Wesentlichen zylindrische Reaktor kann senkrecht angeordnet sein, wobei das Stoffgemisch oben aufgegeben wird, mit Hilfe einer geeigneten Einrichtung gleichmäßig verteilt wird und auf der Innenfläche der Reaktorwandung als dünner Film nach unten strömt. Beheizt wird mantelseitig üblicherweise mit Heizdampf oder Wärmeträgermedium (wie Heißwasser oder Thermoöl). Durch die Zufuhr von Wärme verdampfen die leichter siedenden Bestandteile (im Beispiel Wasser), zurück bleibt ein Konzentrat. Die erzeugten Dämpfe werden als Brüden bezeichnet und strömen z.B. im Gegenstrom zur Flüssigkeit und werden am Kopf des Reaktors abgesaugt. In einem Abscheider werden eventuell mitgerissene Flüssigkeitstropfen abgeschieden. Anschließend können die Dämpfe beispielsweise in einem Kondensator gegen Kühlwasser niedergeschlagen werden. Turbulenz im Film und damit ein guter Wärmeübergang wird durch eine ausreichende Benetzung der Innenfläche der Reaktorwandung sichergestellt.

Aufgrund der Schwerkraft bei senkrechten Verdampfern und/oder mittels geeigneter mechanischer Elemente wird das Einsatzmaterial durch den Verdampfer gefördert.

Die Einsatzmöglichkeiten können sehr unterschiedlich sein: Beispielhaft können mit Dünnschichtverdampfern Einsatzmaterialien, die dünnflüssig wie Wasser oder aber dickflüssig wie Honig sind, schonend in ihre Komponenten bzw. Fraktionen getrennt werden. Weiters können auch Einsatzmaterialien, die mehrphasig vorliegen, im Dünnschichtverdampfer eingedampft werden. Während des Verdampfungsprozesses verändern sich dabei die Eigenschaften der Einsatzmaterialien: Die Zwischenprodukte oder Produkte werden durch den Verdampfungsvorgang beispielsweise zäh und klebrig wie Kaugummi, körnig und abrasiv wie Sand und/oder bilden Ablagerungen auf den Wärmeaustauschflächen des Verdampfers. Je nach thermischer Trennaufgabe und abhängig von den zu verdampfenden Einsatzmaterialien stehen dazu verschiedene mechanisch wirkende Wischsysteme mit unterschiedlichen Wischerelementen zur Auswahl, um einen möglichst gleichmäßigen Film - eine Dünnschicht - auf der Verdampferfläche im Inneren des Reaktors zu gewährleisten.

Beispielsweise ist aus der DE 1 161 852 B ein Dünnschichtverdampfer bekannt geworden, bei dem eine gemeinsame Welle zum Antrieb einer oder mehrerer Förderschnecken in seinem Inneren dient. Die zumindest eine Förderschnecke ist zumindest teilweise unterbrochen, wobei an den unterbrochenen Stellen Windungsteile mit gegenläufiger Steigung vorgesehen sind. Durch diese Maßnahme einer abschnittsweisen gegenläufigen Bewegung der Förderschnecke wird ein im Dünnschichtverdampfer herabrinnender Fallfilm einer zu verdampfenden Flüssigkeit bewusst abschnittsweise gestört bzw. verzögert. Im Falle einer Ausführung mit mehreren Förderschnecken, die durch die gemeinsame Welle angetrieben werden, befinden sich die einzelnen Förderschnecken jeweils in eigenen Verdampferstufen, welche mittels Trennböden voneinander getrennt und als mehrere seriell hintereinander angeordnete Verdampfer ausgeführt sind, wobei in den einzelnen voneinander getrennten Verdampferstufen voneinander verschiedene Arbeitsdrücke herrschen. Aufgrund der unterschiedlichen Arbeitsdrücke sind zur Verbindung der einzelnen Verdampferstufen daher jeweils Verbindungsleitungen samt den entsprechenden Drosselarmaturen erforderlich.

Nachteilig an dieser Ausführung ist zumindest, dass das Einsatzmaterial bzw. die Zwischenprodukte während des Verdampfungsvorgangs im Innenraum des Dünnschichtverdampfers bzw. in den mehreren getrennten Verdampferstufen jeweils nicht über die gesamte Verdampferfläche gleichmäßig verteilt ist bzw. sind.

Weiters ist aus dem Dokument US 3,797,550 B ein Stopfschnecken-Verdampfer bekannt, wie dieser in der Extrusionstechnik für hochviskose Polymerschmelzen eingesetzt wird. Der Stopfschnecken-Verdampfer weist eine Verdampferstufe auf, in welche die Polymerschmelze von oben aufgegeben wird. Anschließend an die Verdampferstufe ist eine sich konisch verjüngende Kompressionszone vorgesehen, an die weiters eine Pumpenstufe anschließt, aus der das eingedampfte Produkt abgezogen wird. Die Verdampferstufe und die Pumpenstufe sind im Wesentlichen zylindrisch gestaltet, wobei die Verdampferstufe einen größeren Innendurchmesser aufweist als die nachgeordnete Pumpenstufe. Gegebenenfalls sind mehrere separate Antriebseinheiten zum Antrieb der schraubenartigen Förderschnecken in der Verdampferstufe sowie der Pumpenstufe vorgesehen.

Im Allgemeinen entscheiden bereits vorliegende Erfahrungswerte und/oder Pilotversuche über die Wahl des für die jeweilige Trennaufgabe am besten geeigneten Wischsystems. Grundsätzlich erfolgt die Auswahl des Wischsystems nach den Eigenschaften (Viskosität, Wärmeleitfähigkeit, Trockensubstanz-Gehalt, Adhäsionsneigung etc.) des Einsatzmaterials und der Rückstandprodukte bzw. des getrockneten Gutes. Von der Anmelderin stehen dazu unter den Bezeichnungen "Blockfilm", "Dryfilm", "Ecofilm", "Powerfilm", "Purefilm", "Rollerfilm" bzw. "Springfilm" unterschiedliche Wischsysteme mit unterschiedlichen Wischerelementen zur Verfügung. Außerdem ist bekannt, dass zwei Dünnschichtapparate auch seriell oder parallel eingesetzt werden können, wenn die Produkteigenschaften der zu trennenden Einsatzstoffe sich während des Verdampfens sehr stark verändern. Beispielsweise können ein Vertikalverdampfer mit sogenannten nacheilenden Wischerblättern, das sind beispielsweise an Scharnieren befestigte Blätter aus Kunststoff oder Metall, die von der Anmelderin unter der Bezeichnung "Ecofilm" vertrieben werden und die mittels Fliehkraft auf die Filmoberfläche gedrückt werden und dabei das zu verdampfende Material verstreichen, und ein Horizontalverdampfer mit einem Starrflügelrotor hintereinander geschaltet werden. Bei einem Starrflügelrotor wird üblicherweise ein Rotor mit angeschraubten oder angeschweißten Wischerelementen mit definiertem Spalt zwischen Wischerelement und Reaktorwandung verwendet. Nachteilig sind dabei allerdings die höheren Investitions- und Betriebskosten der beiden Aggregate.

Aus wirtschaftlichen Gründen wird daher meistens nur ein Dünnschichtverdampfer für eine bestimmte Trennaufgabe eingesetzt. Bei der Wahl des geeigneten Wischsystems muss daher oftmals ein Kompromiss eingegangen werden. Eine optimale Wirtschaftlichkeit wird dennoch nicht erzielt. Oft muss der Dünnschichtverdampfer überdimensioniert werden, da das ausgewählte Wischsystem das Einsatzmaterial bzw. die Zwischenprodukte während des Verdampfungsvorgangs meist nicht im gesamten Innenbereich des Reaktors optimal umwälzen bzw. nicht über die gesamte Verdampferfläche gleichmäßig verteilen kann.

Versuche im Vorfeld, einen Wischerrotor mit unterschiedlichen Wischelementen zu bestücken, zeigten noch nicht den gewünschten Erfolg, da unterschiedliche Wischsysteme jeweils bei verschiedenen Umfangsgeschwindigkeiten bzw. Rotordrehzahlen den jeweils optimalen Wirkungsgrad erreichen. So werden beispielsweise Wischsysteme der Anmelderin, die als Ganzmetallwischer mit dicken und damit schweren, an Scharnieren befestigten Blättern aus Metall ausgeführt sind, die mittels Fliehkraft aus den Film gedrückt werden und bei höher viskosen Produkten eingesetzt werden und unter der Bezeichnung "Powerfilm" am Markt erhältlich sind, üblicherweise mit Umfangsgeschwindigkeiten von ca. 2,5 m/s betrieben. Für eine Endtrocknung werden beispielsweise pendelnd aufgehängte Wischerelemente, das sind pendelnd aufgehängte Metallblätter, die die Reaktorwandung fast berühren und aufgrund der hohen Geschwindigkeit Krusten und dergleichen von der Heizfläche abschlagen, oder Starrrotoren eingesetzt. Dabei beträgt die ideale Umfangsgeschwindigkeit allerdings ca. 8 m/s, weshalb eine Kombination unterschiedlicher Wischerelemente auf ein und demselben Wischerrotor derzeit nicht zweckmäßig ist.

Eine Aufgabe der Erfindung liegt daher in der Schaffung eines Dünnschichtverdampfers, bei welchem die oben beschriebenen Nachteile beseitigt oder weitestgehend vermieden sind und mit dem ein möglichst flexibler Verdampferbetrieb gewährleistet wird.

Diese Aufgabe wird mit einem Dünnschichtverdampfer gemäß Anspruch 1 und mit der Verwendung des Dünnschichtverdampfers gemäß den Ansprüchen 9 und 10 gelöst.

Weitere Vorteile und Merkmale der Erfindung ergeben sich aus den abhängigen Ansprüchen sowie der nachfolgenden Beschreibung.

Vorteilhaft können bei einem erfindungsgemäßen Dünnschichtverdampfer im Innenraum des Reaktorbehälters in zwei unterschiedlichen Zonen, die hier als erste und zweite Verdampferzone bezeichnet werden, unterschiedliche Drehzahlen der jeweiligen Wischeinrichtungen eingestellt werden. Als Wischeinrichtung wird im Rahmen der Anmeldung jeweils ein Rotor mit den entsprechenden Wischerelementen bezeichnet, welche Wischerelemente entsprechend an die Kontur der Innenfläche der Reaktorwandung angepasst sind und im laufenden Betrieb, wenn die Wischeinrichtung also mit einer Umfangsgeschwindigkeit um eine Antriebswelle bewegt bzw. rotiert wird, für einen dünnen Flüssigkeits- oder Feststofffilm der zu trennenden Materialien an der Verdampferfläche an der Innenfläche der Reaktorwandung sorgen. Im Rahmen der Erfindung können - abhängig von den zu verdampfenden Einsatzmaterialien - unterschiedlichste an sich aus dem Stand der Technik bekannte Ausführungen von Wischeinrichtungen eingesetzt werden, die beispielsweise Starrflügel, Wischerflügel, Pendelflügel und/oder Radialwischer aufweisen, wobei die Wischerelemente beispielsweise aus Stahl, Kunststoff, Gummi oder aus einem bürstenartigen Material gefertigt sein können. Weiters können im Rahmen der Erfindung entlang der ersten Antriebswelle im Bereich der ersten Verdampferzone eine oder mehrere erste Wischeinrichtungen jeweils derselben Bauart oder aber unterschiedlicher Bauarten eingesetzt werden. Ebenso können entlang der zweiten Antriebswelle im Bereich der zweiten Verdampferzone eine oder mehrere zweite Wischeinrichtungen jeweils derselben Bauart oder unterschiedlicher Bauarten eingesetzt werden. Die zumindest eine erste Wischeinrichtung der ersten Verdampferzone sowie die zumindest eine zweite Wischeinrichtung der zweiten Verdampferzone können somit in derselben Bauart und Ausführung oder aber in unterschiedlichen Bauarten ausgeführt sein.

Da das Antriebsmittel dazu eingerichtet ist, die erste Antriebswelle in der ersten Verdampferzone mit einer ersten Drehzahl anzutreiben, die von jener zweiten Drehzahl der zweiten Antriebswelle in der zweiten Verdampferzone verschieden ist, kann vorteilhaft die Verdampferfläche der ersten Verdampferzone, die beispielsweise näher zum Einlass für das aufzutrennende Einsatzmaterial angeordnet ist und daher eine Eintrittszone für das noch flüssige Einsatzmaterial darstellt, mit einer vergleichsweise langsameren Drehzahl gewischt werden als in der angrenzenden zweiten Verdampferzone. In der zweiten Verdampferzone, in welcher beispielsweise eine Trocknung des bereits zuvor in der ersten Verdampferzone weitestgehend von einer leichter flüchtigen Fraktion abgereicherten Rückstands stattfindet, wird hier beispielsweise mit einer vergleichsweise höheren Drehzahl als in der ersten Verdampferzone gewischt, um ein Ankleben des eingedickten Rückstands an der Reaktorwandung zu verhindern. Der eingetrocknete Rückstand, der auch als Konzentrat bezeichnet wird, wird nach Passieren der zweiten Verdampferzone, die auch als Austrittszone bezeichnet wird und heizseitig von der ersten Verdampfungszone getrennt ausgeführt sein kann, über den Auslass für den Rückstand aus dem Dünnschichtverdampfer ausgetragen. Die leichter flüchtigen Anteile bzw. Komponenten des Einsatzmaterials verlassen als Brüden über den Brüdenabzug den Dünnschichtverdampfer. Ebenso kann im Rahmen der Erfindung die erste Drehzahl, mit der in der ersten Verdampferzone gewischt wird, auch höher oder gleich hoch sein als die zweite Drehzahl, mit der die zweite Antriebswelle angetrieben wird bzw. mit der die zweiten Wischeinrichtungen in der zweiten Verdampferzone rotiert werden.

Somit können im erfindungsgemäßen Dünnschichtverdampfer in den beiden Verdampferzonen für die zu verdampfenden Materialien jeweils individuell möglichst optimale Betriebsweisen eingestellt werden, wobei vorteilhaft die Anzahl, Bauart bzw. Ausführung der Wischeinrichtungen sowie die Drehzahl bzw. die Umfangsgeschwindigkeit, mit der die Wischeinrichtungen in den einzelnen Verdampferzonen bewegt werden, eingestellt bzw. variiert werden können.

Insbesondere wenn die Abtrennungsrate von leichter siedenden Anteilen nicht mehr durch den Wärmeübergang bei der Verdampfung bestimmt wird, sondern bereits diffusionslimitiert ist, sind entsprechend hohe Wischfrequenzen und erhöhte Verweilzeiten sehr von Vorteil, um eine hohe Ausbeute bei der Verdampfung zu erzielen.

In einer zweckmäßigen Ausführung der Erfindung kann bei einem Dünnschichtverdampfer die erste Drehzahl der ersten Antriebswelle für die zumindest eine erste Wischeinrichtung in der ersten Verdampferzone niedriger gewählt sein, als jene Drehzahl der zweiten Antriebswelle für die zumindest eine zweite Wischeinrichtung in der zweiten Verdampferzone. Wie vorhin bereits erwähnt bietet eine vergleichsweise höhere Drehzahl der zweiten Antriebswelle bzw. der an dieser zweiten Antriebswelle befestigten Wischeinrichtungen in der zweiten Verdampferzone den Vorteil, dass in diesem Bereich der Verdampferfläche, in dem die Endtrocknung erfolgt und die zu trocknenden Rückstände oftmals besonders zäh und klebrig sind, durch eine höhere Drehzahl bzw. eine höhere Umfangsgeschwindigkeit der Wischeinrichtungen ein unerwünschtes Anbacken bzw. Ankleben des Rückstands verhindert wird.

Bei einem erfindungsgemäßen Dünnschichtverdampfer sind die erste Antriebswelle und die zweite Antriebswelle zueinander konzentrisch angeordnet. In dieser besonders kompakten Ausführungsform der Erfindung sind die erste Antriebswelle und die zweite Antriebswelle konzentrisch bzw. koaxial zueinander angeordnet, wodurch auch die Lagerung der beiden Antriebswellen vereinfacht wird.

Weiters durchsetzt bei einem Dünnschichtverdampfer gemäß der Erfindung die zweite Antriebswelle die erste, hohl ausgebildete Antriebswelle. Diese Ausführung bietet aufgrund der besonders kompakten Bauweise - die zweite Antriebswelle wird innerhalb der ersten Antriebswelle geführt - Vorteile insbesondere bei bestehenden Dünnschichtverdampfern, die von einer bestehenden einzelnen Antriebswelle auf eine erfindungsgemäße Wellenanordnung mit zwei Antriebswellen umgerüstet werden sollen.

Zweckmäßig verläuft in einer Ausführungsvariante bei der Verwendung eines erfindungsgemäßen Dünnschichtverdampfers die Längsachse des zylindrischen Reaktorbehälters horizontal. In dieser Ausführung ist der Reaktorbehälter liegend angeordnet. Die Wischeinrichtungen dienen dazu, das zu verdampfende Material, das an der Innenfläche der beheizten Reaktorwandung in Richtung der Schwerkraft nach unten rinnt, möglichst gleichmäßig über den gesamten Umfang bzw. Innenmantel der Innenfläche des Reaktors zu verteilen.

In einer alternativen Ausführung der Erfindung verläuft bei der Verwendung eines erfindungsgemäßen Dünnschichtverdampfers die Achse des zylindrischen Reaktorbehälters vertikal. In dieser Ausführung ist der Reaktorbehälter stehend angeordnet und die Wischeinrichtungen dienen dazu, das zu verdampfende Material, das an der Innenfläche der beheizten Reaktorwandung in Richtung der Schwerkraft nach unten rinnt, möglichst gleichmäßig über den gesamten Umfang bzw. Innenmantel der Innenfläche des Reaktors zu verteilen.

In einer vorteilhaften Weiterbildung der Erfindung sind bei einem Dünnschichtverdampfer die beiden Antriebswellen über ein Planetengetriebe mit einem Motor verbunden. Die auf den umlaufenden Wellenachsen drehenden Getrieberäder bzw. Planetenräder umkreisen dabei ein zentrales Getrieberad, das als Sonnenrad bezeichnet wird, ähnlich wie Planeten die Sonne. Planetengetriebe bzw. Umlaufrädergetriebe sind kompakt bauende Getriebe mit dem besonderen Merkmal, dass die beiden Antriebswellen, die auch als Antriebs- und AbtriebsWelle bezeichnet werden, zueinander fluchten.

Bevorzugt liegt das Übersetzungsverhältnis des Planetengetriebes im Bereich von 1:2 bis 1:6. Somit können von einem Antriebsmittel bzw. von einem Motor mittels des Planetengetriebes die beiden Antriebswellen für die ersten und die zweiten Wischeinrichtungen in unterschiedlichen Relativgeschwindigkeiten bzw. mit unterschiedlichen relativen Drehzahlen betrieben werden.

Bei einem erfindungsgemäßen Dünnschichtverdampfer kann es zweckmäßig sein, wenn der Antrieb zumindest einen drehzahlgesteuerten Elektromotor aufweist. Vorteilhaft kann mit einem drehzahlgesteuerten Elektromotor die Drehzahl der Wellenanordnung und somit die Drehzahlen der ersten Antriebswelle und der zweiten Antriebswelle justiert werden.

In einer weiteren bevorzugten Ausführungsform der Erfindung ist bei einem Dünnschichtverdampfer jeder der beiden Antriebswellen ein eigener Antrieb zugeordnet. In dieser Ausführungsform entfällt das Planetengetriebe. In dieser besonders robusten Ausführung der Erfindung weist jede Antriebswelle einen eigenen Antrieb, beispielsweise jeweils einen drehzahlgesteuerten Elektromotor, auf. Vorteilhaft können die beiden Antriebe unabhängig voneinander gewartet bzw. erforderlichenfalls getauscht werden.

Im Rahmen der Erfindung kann bei einem Dünnschichtverdampfer die Heizeinrichtung zonenweise Heizabschnitte an der mantelseitigen Reaktorwandung umfassen, wobei die Heizabschnitte mit unterschiedlichen Heizmedien beheizbar sind und/oder die Heizabschnitte auf unterschiedliche Temperaturniveaus einstellbar sind. Besonders zweckmäßig können in dieser Ausführung unterschiedliche Heizzonen bzw. Heizabschnitte entlang der beheizten mantelseitigen Reaktorwandung realisiert werden. Gegebenenfalls können die beheizten Mantelzonen der Reaktorwandung unterteilt werden, so dass auch unterschiedliche Heizmedien mit unterschiedlichen Temperaturniveaus zur Beheizung des Dünnschichtverdampfers verwendet werden können.

In einer weiteren zweckmäßigen Ausführung der Erfindung können bei einem Dünnschichtverdampfer mit einem ersten Heizabschnitt die mantelseitige Reaktorwandung der ersten Verdampferzone sowie mit einem zweiten Heizabschnitt die mantelseitige Reaktorwandung der zweiten Verdampferzone getrennt voneinander beheizt werden.

Die Erfindung samt weiteren Merkmalen ist im Folgenden an Hand beispielsweiser Ausführungen näher erläutert, die in den schematischen Zeichnungen veranschaulicht sind. In diesen zeigen
- Fig. 1 in einer teilweisen Schnittansicht von der Seite eine erste Ausführung eines erfindungsgemäßen Dünnschichtverdampfers;
- Fig. 2 in einer Schnittansicht von der Seite ein Detail des in Fig. 1 gezeigten Dünnschichtverdampfers;
- Fig. 3 in einer Draufsicht ein Planetenradgetriebe, wobei die Schnittlinie A-A der in Fig. 2 gezeigten Schnittansicht entspricht;
- Fig. 4 in einer isometrischen Ansicht schräg von oben das in Fig. 2 gezeigte Planetenradgetriebe.

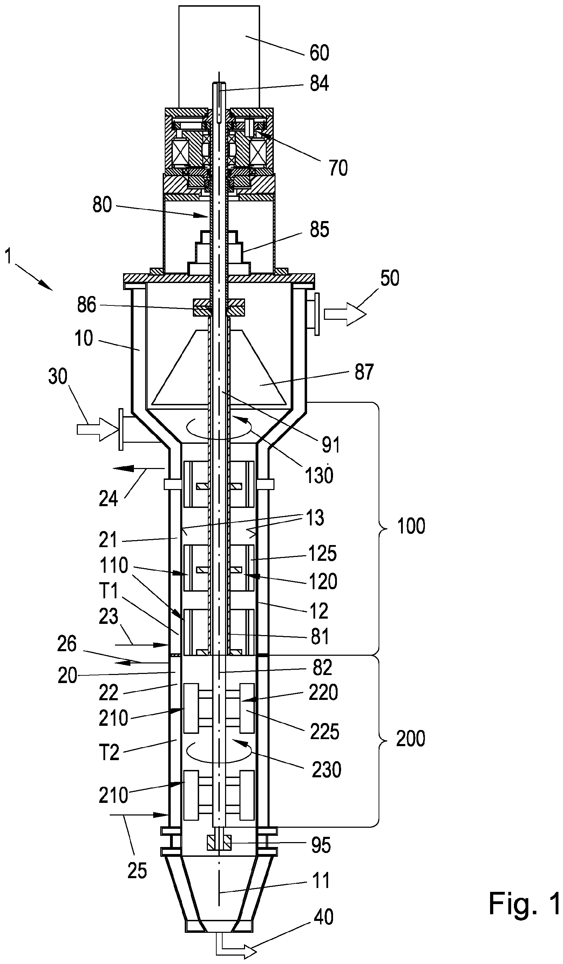

Fig. 1 veranschaulicht einen erfindungsgemäßen Dünnschichtverdampfer 1 mit einem im Wesentlichen zylindrischen Reaktorbehälter 10, der hier stehend, also mit einer vertikalen Achsenrichtung 11 des Reaktorbehälters 10 gezeigt ist. Eine Reaktorwandung 12 weist eine glatte, zylindrische Innenfläche 13 auf, die mit einem außenliegenden Heizmantel 20 bzw. einer Heizeinrichtung 20 versehen ist und als beheizbare Verdampferfläche 13 dient. Die Heizeinrichtung 20 wird von einem Heizmedium, beispielsweise Heißdampf oder Thermoöl, durchströmt.

In Fig. 1 ist die Heizeinrichtung 20 zonenweise bzw. abschnittsweise unterteilt in einen ersten Heizabschnitt 21 sowie einen zweiten Heizabschnitt 22, die hier beispielhaft von unterschiedlichen Heizmedien durchströmt werden. So wird der erste Heizabschnitt 21 von einem ersten Heizmedium beheizt, welches an einem pfeilförmig gekennzeichneten Eintritt 23 in die Heizeinrichtung 20 gelangt und nach dem Wärmetauscherprinzip im Gleichstrom oder im Gegenstrom in Bezug zum im Reaktorinnenraum zu verdampfenden Einsatzmaterials den ersten Heizabschnitt 21 der Heizeinrichtung 20 durchströmt und diese bei einem Austritt 24 wieder verlässt. Im ersten Heizabschnitt 21 ist ein erstes Heiztemperaturniveau T1 einstellbar. Der zweite Heizabschnitt 22 wird von einem zweiten Heizmedium beheizt, welches an einem pfeilförmig gekennzeichneten Eintritt 25 in die Heizeinrichtung 20 gelangt und ebenfalls nach dem Wärmetauscherprinzip im Gleichstrom oder im Gegenstrom in Bezug zum im Reaktorinnenraum zu verdampfenden Einsatzmaterials den zweiten Heizabschnitt 22 der Heizeinrichtung 20 durchströmt und diese bei einem Austritt 26 wieder verlässt. Im zweiten Heizabschnitt 22 kann ein zweites Heiztemperaturniveau T2 eingestellt werden, welches je nach Trennaufgabe heißer oder kälter als das Temperaturniveau T1 des ersten Heizabschnitts 21 ist. Entsprechende Kreislaufleitungen des Heizmediums bzw. gegebenenfalls getrennte Kreislaufleitungen für unterschiedliche Heizmedien sind ebenfalls der besseren Übersicht wegen in Fig. 1 nicht dargestellt.

Der Reaktorbehälter 10 weist außerdem einen Einlass 30 für das aufzutrennende Einsatzmaterial sowie einen Auslass 40 für einen Rückstand/Konzentrat, also die schwerflüchtige Fraktion des zu verdampfenden Einsatzmaterials, sowie einen Brüdenabzug 50 für die als Brüden bezeichnete leichterflüchtige Fraktion des zu verdampfenden Einsatzmaterials auf. Auch die eintretenden bzw. austretenden Stoffströme 30, 40, 50 sind jeweils durch Pfeile symbolisiert, wobei entsprechende aus dem Stand der Technik bekannte Rohrleitungen oder Auffanggebinde nicht gezeigt sind. Weiters ist eine üblicherweise für eine schonende Verdampfung erforderliche Vakuumerzeugungsapparatur samt den dazu erforderlichen Anschlussleitungen sowie den entsprechenden Steuerungseinrichtungen in Fig. 1 nicht dargestellt.

Am Kopf des Dünnschichtverdampfers 1 ist ein Antriebsmittel 60 bzw. ein Motor 60 an einem Planetengetriebe 70 angeflanscht. Das Planetengetriebe 70 wirkt auf eine Antriebswellenanordnung 80 mit einer ersten Antriebswelle 81 sowie einer zweiten Antriebswelle 82, die zueinander konzentrisch angeordnet sind und wobei die zweite Antriebswelle 82 die erste, hohl ausgebildete Antriebswelle 81 durchsetzt. Die Wellendurchführung der Antriebswellenanordnung 80 ist mit einer Gleitringdichtung 85 zum Innenraum des Reaktorbehälters 10 abgedichtet. Weiters ist eine Abdichtung 86 zwischen den beiden Antriebswellen 81 und 82 vorgesehen. Ein Tropfenabscheider 87 verhindert hier, dass leicht flüchtiges Einsatzmaterial direkt vom Einsatzmaterial-Einlass 30 - ohne in die Verdampfungszone zu gelangen - in den Brüdenabzug 50 gelangt und somit ohne ausreichenden Kontakt bzw. ausreichende Verweilzeit in der Verdampferzone den Dünnschichtverdampfer 10 ohne Verdampfung passiert.

Die erste Antriebswelle 81 weist eine erste Antriebswellenachse 91 auf, die hier konzentrisch bzw. koaxial mit der zweiten Antriebswellenachse 92 der zweiten Antriebswelle 82 angeordnet ist. Die beiden Antriebswellen 81, 82 werden vorteilhaft in einem gemeinsamen Fußlager 95 gelagert. Das aufzutrennende Einsatzmaterial gelangt durch den Einlass 30 in eine erste Verdampferzone 100 im Reaktorbehälter 10, die auch als Eintrittszone 100 bezeichnet wird. Entlang der ersten Antriebswelle 81 sind hier mehrere erste Wischeinrichtungen 110 befestigt, welche jeweils einen ersten Rotor 120 mit jeweils in radialer Richtung des Rotors 120 an dessen Rotorblättern befestigten ersten Wischerelementen 125 aufweisen. Der Rotor 120 ist hier schematisch beispielsweise mit zwei einander diametral gegenüberliegenden Wischerelementen dargestellt. Ebenso ist es im Rahmen der Erfindung denkbar, Rotoren mit nur einem Wischerblatt und/oder Rotoren mit mehr als zwei Wischerelementen einzusetzen. Die erste Antriebswelle 81 wird mit einer ersten Drehzahl 130, welche als Pfeil 130 veranschaulicht ist, vom Motor 60 angetrieben.

In Längsachsenrichtung 11 direkt an die erste Verdampferzone 100 angrenzend befindet sich eine zweite Verdampferzone 200, die beispielsweise auch als Austrittszone 200 bezeichnet werden kann, da sich diese zweite Verdampferzone 200 in Fig. 1 weiter unterhalb des Einlasses 30 für das aufzutrennende Einsatzmaterial nahe des Auslasses 40 für das Konzentrat befindet. In der zweiten Verdampferzone 200 sind an der zweiten Antriebswelle 82 mehrere zweite Wischeinrichtungen 210 befestigt, welche jeweils einen zweiten Rotor 220 sowie an dessen Rotorblättern befestigte zweite Wischerelemente 225 aufweisen. Die zweiten Wischeinrichtungen 210 werden hier mit einer zweiten Drehzahl 230 rotiert, wobei die zweite Drehzahl 230 wiederum durch einen Pfeil 230 veranschaulicht ist. Die zweite Antriebswelle 82 wird hier ebenfalls vom Motor 60 angetrieben.

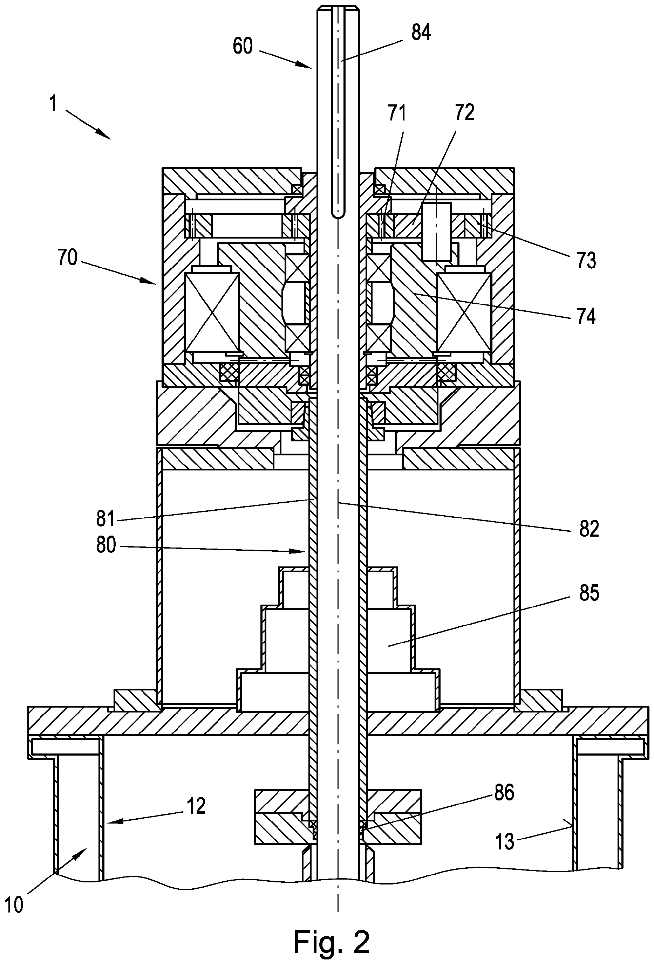

Ein an sich bekanntes Planetengetriebe 70, welches in Fig. 2 in einer Schnittansicht von der Seite im Detail gezeigt ist, dient dabei zur Einstellung der unterschiedlichen Drehzahlen 130, 230, mit denen die erste Antriebswelle 81 bzw. die zweite Antriebswelle 82 von dem gemeinsamen Motor 60 angetrieben werden. In Fig. 2 sind dazu die an sich bekannten, relevanten Getriebebauteile eines Planetengetriebes 70 näher bezeichnet: Die hier innenliegende zweite Antriebswelle 82 bildet die angetriebene Welle, welche mit einer nicht dargestellten Passfeder, die in eine Wellennut 84 der angetriebenen Antriebswelle 82 eingelegt, mit dem Motor 60 gekoppelt wird. Diese angetriebene Antriebswelle 82 ist mit einem Sonnenrad 71 versehen. Um dieses Sonnenrad 71 drehen sich die äußeren Planetenräder. Ein Hohlrad 73 ist mit dem Gehäuse des Planetengetriebes 70 verschraubt. Ein Planetenradträger 74 ist mit der äußeren ersten Antriebswelle 81 gekoppelt.

Beispielsweise kann bei einem vertikal angeordneten Dünnschichtverdampfer 1, wie dieser in Fig. 1 gezeigt ist, der einen inneren Durchmesser der Innenfläche 13 der Reaktorwandung 12 beispielsweise von 1000 mm aufweist, eine erste Drehzahl 130 der ersten Antriebswelle 81 beispielsweise von 48 Umdrehungen/min [1/min] mit einer Umfangsgeschwindigkeit von 2,5 m/s für eine erste Wischeinrichtung 110 in der ersten Verdampferzone 100 realisiert werden. Die Wischeinrichtung 110 ist dabei in der ersten Verdampferzone 100 beispielsweise gemäß den Ausführungen "Ecofilm" oder "Powerfilm" der Anmelderin jeweils als Ganzmetallwischer ausgeführt. Die innere, angetriebene zweite Antriebswelle 82 rotiert dabei mit einer zweiten Drehzahl 230 beispielsweise von 153 Umdrehungen/min [1/min]. In der unteren, zweiten Verdampferzone 200 sind dazu beispielsweise Wischeinrichtungen 210 mit pendeln aufgehängten Stahlblättern im Einsatz, die von der Anmelderin unter der Bezeichnung "Dryfilm" erhältlich sind. Damit ergibt sich für dieses Ausführungsbeispiel ein Übersetzungsverhältnis von 1:3,2.

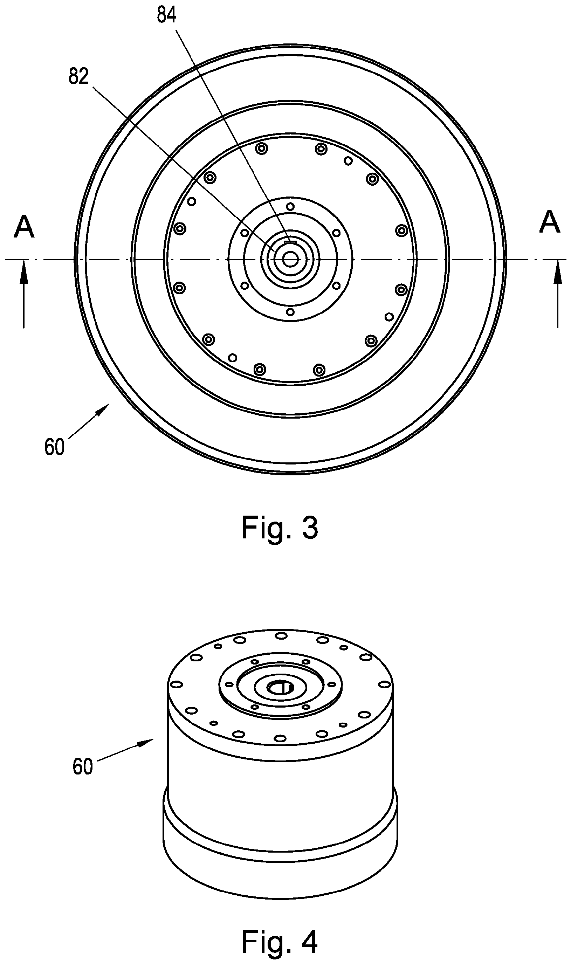

Fig. 3 zeigt in einer Draufsicht das Planetenradgetriebe 60, wobei die Schnittlinie A-A der in Fig. 2 gezeigten Schnittansicht entspricht. Fig. 4 zeigt in einer isometrischen Ansicht schräg von oben das in Fig. 2 gezeigte Planetenradgetriebe 60.

### LISTE DER BEZUGSZEICHEN

- 1: Dünnschichtverdampfer
- 10: Reaktorbehälter
- 11: Achsenrichtung des Reaktorbehälters
- 12: Reaktorwandung
- 13: Innenfläche der Reaktorwandung
- 20: Heizeinrichtung bzw. Heizmantel
- 21: (erster) Heizabschnitt
- 22: (zweiter) Heizabschnitt
- 23: Eintritt (erstes) Heizmedium (Pfeil)
- 24: Austritt (erstes) Heizmedium (Pfeil)
- 25: Eintritt (zweites) Heizmedium (Pfeil)
- 26: Austritt (zweites) Heizmedium (Pfeil)
- 30: Einlass für das aufzutrennende Einsatzmaterial (Pfeil)
- 40: Auslass für Rückstand/Konzentrat (Pfeil)
- 50: Brüdenabzug (Pfeil)
- 60: Antriebsmittel, Motor
- 70: Planetengetriebe
- 71: Sonnenrad
- 72: Planetenrad
- 73: Hohlrad
- 74: Planetenradträger
- 80: Antriebswellenanordnung
- 81: erste Antriebswelle
- 82: zweite Antriebswelle
- 84: Wellennut
- 85: Gleitringdichtung
- 86: Abdichtung zwischen den beiden Antriebswellen
- 87: Tropfenabscheider
- 91: erste Antriebswellenachse
- 92: zweite Antriebswellenachse
- 95: Fußlager
- 100: erste Verdampferzone (Eintrittszone)
- 110: erste Wischeinrichtung
- 120: erster Rotor
- 125: erstes Wischerblatt
- 130: erste Drehzahl (Pfeil)
- 200: zweite Verdampferzone (Austrittszone)
- 210: zweite Wischeinrichtung
- 220: zweiter Rotor
- 225: zweites Wischerblatt
- 230: zweite Drehzahl (Pfeil)
- T1: Heiztemperatur im ersten Heizabschnitt
- T2: Heiztemperatur im zweiten Heizabschnitt

## Patentansprüche

1. Dünnschichtverdampfer (1) zum Trennen leichter flüchtiger Fraktionen von schwerer siedenden Rückständen durch Eindampfen, mit einem geschlossenen, zylindrischen Reaktorbehälter (10), dessen Reaktorwandung (12) mittels einer Heizeinrichtung (20) beheizbar ist, mit einem Einlass (30) für das aufzutrennende Einsatzmaterial, einem Auslass (40) für die Rückstände und einem Abzug (50) für die Brüden, sowie mit zumindest einer, mit einem Antriebsmittel (60) verbundenen Antriebswellenanordnung (80), die zumindest eine Wischeinrichtung (110) mit einem Rotor (120) mit Wischerelementen (125) für die Innenfläche (13) der Reaktorwandung (12) besitzt, wobei der Reaktorbehälter (10) zwei aneinandergrenzende Zonen (100, 200) aufweist, nämlich eine erste Verdampferzone (100) mit zumindest einer ersten Wischeinrichtung (110) umfassend einen Rotor (120) mit Wischerelementen (125) und eine zweite Verdampferzone (200) mit zumindest einer zweiten Wischeinrichtung (210) umfassend einen Rotor (220) mit Wischerelementen (225) für die Innenfläche (13) der Reaktorwandung (12), wobei die Antriebswellenanordnung (80) eine erste Antriebswelle (81) und eine zweite Antriebswelle (82) aufweist und die zumindest eine erste Wischeinrichtung (110) an der ersten Antriebswelle (81) sowie die zumindest eine zweite Wischeinrichtung (210) an der zweiten Antriebswelle (82) befestigt sind, und das Antriebsmittel (60) dazu eingerichtet ist, die erste Antriebswelle (81) in der ersten Verdampferzone (100) mit einer Drehzahl (130) anzutreiben, die von jener Drehzahl (230) der zweiten Antriebswelle (82) in der zweiten Verdampferzone (200) verschieden ist, wobei die erste Antriebswelle (81) und die zweite Antriebswelle (82) zueinander konzentrisch (91, 92) angeordnet sind, **dadurch gekennzeichnet, dass** die zweite Antriebswelle (82) die erste, hohl ausgebildete Antriebswelle (81) durchsetzt.

2. Dünnschichtverdampfer (1) nach Anspruch 1, **dadurch gekennzeichnet, dass** die Drehzahl (130) der ersten Antriebswelle (81) für die zumindest eine erste Wischeinrichtung (210) in der ersten Verdampferzone (100) niedriger gewählt ist, als jene Drehzahl (230) der zweiten Antriebswelle (82) für die zumindest eine zweite Wischeinrichtung (210) in der zweiten Verdampferzone (200).

3. Dünnschichtverdampfer (1) nach Anspruch 1 oder 2, **dadurch gekennzeichnet, dass** die beiden Antriebswellen (81, 82) über ein Planetengetriebe (70) mit einem Motor (60) verbunden sind.

4. Dünnschichtverdampfer (1) nach Anspruch 3, **dadurch gekennzeichnet, dass** ein Übersetzungsverhältnis des Planetengetriebes (70) im Bereich von 1:2 bis 1:6 liegt.

5. Dünnschichtverdampfer (1) nach einem der Ansprüche 1 bis 4, **dadurch gekennzeichnet, dass** der Antrieb (60) zumindest einen drehzahlgesteuerten Elektromotor aufweist.

6. Dünnschichtverdampfer (1) nach einem der Ansprüche 1 bis 5, **dadurch gekennzeichnet, dass** jeder der beiden Antriebswellen (81, 82) ein eigener Antrieb (60) zugeordnet ist.

7. Dünnschichtverdampfer (1) nach einem der Ansprüche 1 bis 6, **dadurch gekennzeichnet, dass** die Heizeinrichtung (20) zonenweise Heizabschnitte (21, 22) an der mantelseitigen Reaktorwandung (12) umfasst, wobei die Heizabschnitte (21, 22) mit unterschiedlichen Heizmedien (23, 25) beheizbar sind und/oder die Heizabschnitte (21, 22) auf unterschiedliche Temperaturniveaus (T1, T2) einstellbar sind.

8. Dünnschichtverdampfer (1) nach Anspruch 7, **dadurch gekennzeichnet, dass** mit einem ersten Heizabschnitt (21) die mantelseitige Reaktorwandung (12) der ersten Verdampferzone (100) sowie mit einem zweiten Heizabschnitt (22) die mantelseitige Reaktorwandung (12) der zweiten Verdampferzone (200) getrennt voneinander beheizbar sind.

9. Verwendung eines Dünnschichtverdampfers (1) nach einem der Ansprüche 1 bis 8, **dadurch gekennzeichnet, dass** der Reaktorbehälter (10) liegend angeordnet ist, wobei eine Längsachse (11) des zylindrischen Reaktorbehälters (10) horizontal verläuft.

10. Verwendung eines Dünnschichtverdampfers (1) nach einem der Ansprüche 1 bis 8, **dadurch gekennzeichnet, dass** der Reaktorbehälter (10) stehend angeordnet ist, wobei die Längsachse (11) des zylindrischen Reaktorbehälters (10) vertikal verläuft.

## Claims

1. A thin film evaporator (1) for separating more volatile fractions from higher-boiling residues by evaporation, having: a closed, cylindrical reactor container (10), the reactor wall (12) of which can be heated by means of a heater (20), with an inlet (30) for the charge material to be separated, an outlet (40) for the residues, and a vent (50) for the exhaust vapours; and at least one drive shaft assembly (80) which is connected to a drive means (60) and has at least one wiping device (110) having a rotor (120) with wiper elements (125) for the inner face (13) of the reactor wall (12), the reactor container (10) having two adjacent zones (100, 200), specifically a first evaporator zone (100) with at least one first wiping device (110) comprising a rotor (120) with wiper elements (125), and a second evaporator zone (200) with at least one second wiping device (210) comprising a rotor (220) with wiper elements (225) for the inner face (13) of the reactor wall (12), the drive shaft assembly (80) having a first drive shaft (81) and a second drive shaft (82), and the at least one first wiping device (110) being fastened to the first drive shaft (81), and the at least one second wiping device (210) being fastened to the second drive shaft (82), and the drive means (60) being designed to drive the first drive shaft (81) in the first evaporator zone (100) at a rotation speed (130) which is different from the rotation speed (230) of the second drive shaft (82) in the second evaporator zone (200), the first drive shaft (81) and the second drive shaft (82) being arranged concentrically (91, 92) to each other,
**characterised in that**
the second drive shaft (82) penetrates the first, hollow drive shaft (81).

2. The thin film evaporator (1) according to Claim 1, **characterised in that**
the rotation speed (130) of the first drive shaft (81) for the at least one first wiping device (210) in the first evaporator zone (100) is selected to be lower than the rotation speed (230) of the second drive shaft (82) for the at least one second wiping device (210) in the second evaporator zone (200).

3. The thin film evaporator (1) according to Claim 1 or 2,
**characterised in that**
the two drive shafts (81, 82) are connected to a motor (60) via a planetary gearing system (70).

4. The thin film evaporator (1) according to Claim 3,
**characterised in that**
a gear ratio of the planetary gearing system (70) lies within the range of 1:2 to 1:6.

5. The thin film evaporator (1) according to any one of Claims 1 to 4,
**characterised in that**
the drive (60) has at least one rotation-speed-controlled electric motor.

6. The thin film evaporator (1) according to any one of Claims 1 to 5,
**characterised in that**
each of the two drive shafts (81, 82) is assigned a dedicated drive (60).

7. The thin film evaporator (1) according to any one of Claims 1 to 6,
**characterised in that**
the heater (20) comprises heating sections (21, 22) by zone on the jacket-side reactor wall (12), wherein the heating sections (21, 22) can be heated using different heating media (23, 25) and/or the heating sections (21, 22) can be set to different temperature levels (T1, T2).

8. The thin film evaporator (1) according to Claim 7,
**characterised in that**
the jacket-side reactor wall (12) of the first evaporator zone (100) can be heated with a first heating section (21) and the jacket-side reactor wall (12) of the second evaporator zone (200) can be heated with a second heating section (22), separately from each other.

9. The use of a thin film evaporator (1) according to any one of Claims 1 to 8,
**characterised in that**
the reactor container (10) lies horizontally, wherein a longitudinal axis (11) of the cylindrical reactor container (10) runs horizontally.

10. The use of a thin film evaporator (1) according to any one of Claims 1 to 8,
**characterised in that**
the reactor container (10) stands vertically, wherein the longitudinal axis (11) of the cylindrical reactor container (10) runs vertically.

## Revendications

1. Evaporateur à couche mince (1) pour la séparation de fractions plus facilement volatiles de résidus bouillant plus difficilement par évaporation, comportant un récipient de réacteur (10) cylindrique, fermé, dont la paroi de réacteur (12) est apte à être chauffée au moyen d'un dispositif de chauffage (20), comportant une entrée (30) pour la charge à séparer, une sortie (40) pour les résidus et une évacuation (50) pour les buées, ainsi que comportant au moins un dispositif à arbres d'entraînement (80) qui est relié à un moyen d'entraînement (60) et qui possède au moins un dispositif d'essuyage (110) comportant un rotor (120) ayant des éléments d'essuyage (125) pour la surface interne (13) de la paroi de réacteur (12), dans lequel le récipient de réacteur (10) présente deux zones adjacentes (100, 200), à savoir une première zone d'évaporation (100) ayant au moins un premier dispositif d'essuyage (110) comportant un rotor (120) ayant des éléments d'essuyage (125), et une seconde zone d'évaporation (200) ayant au moins un second dispositif d'essuyage (210) comportant un rotor (220) ayant des éléments d'essuyage (225) pour la surface interne (13) de la paroi de réacteur (12), dans lequel le dispositif à arbres d'entraînement (80) présente un premier arbre d'entraînement (81) et un second arbre d'entraînement (82) et ledit moins un premier dispositif d'essuyage (110) est fixé sur le premier arbre d'entraînement (81) ainsi que ledit moins un second dispositif d'essuyage (210) est fixé sur le second arbre d'entraînement (82), et le moyen d'entraînement (60) est conçu pour entraîner le premier arbre d'entraînement (81) dans la première zone d'évaporation (100) avec une première vitesse de rotation (130), qui est différente de la vitesse de rotation (230) du second arbre d'entraînement (82) dans la seconde zone d'évaporation (200), dans lequel le premier arbre d'entraînement (81) et le second arbre d'entraînement (82) sont disposés de façon concentrique l'un par rapport à l'autre (91, 92), **caractérisé par le fait que** le second arbre d'entraînement (82) traverse le premier arbre d'entraînement (81) réalisé creux.

2. Evaporateur à couche mince (1) selon la revendication 1, **caractérisé par le fait que** la vitesse de rotation (130) du premier arbre d'entraînement (81) pour ledit au moins un premier dispositif d'essuyage (210) dans la première zone d'évaporation (100) est choisie inférieure à la vitesse de rotation (230) du second arbre d'entraînement (82) pour ledit au moins un second dispositif d'essuyage (210) dans la seconde zone d'évaporation (200).

3. Evaporateur à couche mince (1) selon l'une des revendications 1 et 2, **caractérisé par le fait que** les deux arbres d'entraînement (81, 82) sont reliés par un engrenage planétaire (70) ayant un moteur (60).

4. Evaporateur à couche mince (1) selon la revendication 3, **caractérisé par le fait qu'un** rapport de transmission de l'engrenage planétaire (70) se trouve dans une plage de 1:2 à 1:6.

5. Evaporateur à couche mince (1) selon l'une des revendications 1 à 4, **caractérisé par le fait que** le moyen d'entraînement (60) présente au moins un moteur électrique à vitesse de rotation commandée.

6. Evaporateur à couche mince (1) selon l'une des revendications 1 à 5, **caractérisé par le fait que** chacun des deux arbres d'entraînement (81, 82) est associé à un moyen d'entraînement propre (60).

7. Evaporateur à couche mince (1) selon l'une des revendications 1 à 6, **caractérisé par le fait que** le dispositif de chauffage (20) comporte des sections de chauffage (21, 22) par zones sur la paroi de réacteur (12) côté enveloppe, les sections de chauffage (21, 22) étant aptes à être chauffées par des milieux de chauffage (23, 25) différents et/ou les sections de chauffage (21, 22) étant aptes à être réglées à des niveaux de température (T1, T2) différents.

8. Evaporateur à couche mince (1) selon la revendication 7, **caractérisé par le fait qu'**avec une première section de chauffage (21), la paroi de réacteur côté enveloppe (12) de la première zone d'évaporation (100), ainsi qu'avec une seconde section de chauffage (22), la paroi de réacteur côté enveloppe (12) de la seconde zone d'évaporation (200) sont aptes à être chauffées séparément l'une de l'autre.

9. Utilisation d'un évaporateur à couche mince (1) selon l'une des revendications 1 à 8, **caractérisée par le fait que** le récipient de réacteur (10) est disposé couché, un axe longitudinal (11) du récipient de réacteur cylindrique (10) s'étendant horizontalement.

10. Utilisation d'un évaporateur à couche mince (1) selon l'une des revendications 1 à 8, **caractérisée par le fait que** le récipient de réacteur (10) est disposé debout, l'axe longitudinal (11) du récipient de réacteur cylindrique (10) s'étendant verticalement.
